# EUROPÄISCHE PATENTSCHRIFT

(11) **EP 2 135 756 B1**
(45) Veröffentlichungstag und Bekanntmachung des Hinweises auf die Patenterteilung: **23.03.2011**
(21) Anmeldenummer: 09005611.0
(22) Anmeldetag: 22.04.2009
(51) Int. Cl.: B60G 17/02, F16F 15/02

(54) **Federbein für Radaufhängungen von Kraftfahrzeugen**
Suspension strut for wheel suspensions in motor vehicles
Jambe de force pour suspensions de roues de véhicules automobiles

(30) Priorität: 18.06.2008 DE 102008029062
(43) Veröffentlichungstag der Anmeldung: 23.12.2009
(73) Patentinhaber: Audi AG, 85045 Ingolstadt (DE)
(72) Erfinder: Michel, Wilfried, 93339 Riedenburg (DE)
(74) Vertreter: Asch, Konrad

(56) Entgegenhaltungen:
- EP-A- 0 291 087
- EP-A- 1 681 186
- DE-B3-102004 014 336
- FR-A- 2 840 257
- FR-A- 2 897 330

## Beschreibung

Die Erfindung betrifft ein Federbein für Radaufhängungen von Kraftfahrzeugen gemäß dem Oberbegriff des Patentanspruches 1.

Bei derartigen, in einer Vielzahl bekannten Federbeinen kann es durch kinematisch und durch deren elastische Lagerungen bedingte Verzwängungen in der Radaufhängung zu einer verminderten Ansprechempfindlichkeit und ggf. zu einem sogenannten stick-slip-Effekt des Stoßdämpfers kommen, wodurch der Fahrkomfort des Kraftfahrzeuges beeinträchtigt sein kann. Verursacht wird dies im Wesentlichen durch mehr oder minder starke Querkräfte und Biegemomente, die auf die Kolbenstange des Stoßdämpfers wirken und die teils durch einseitig wirkende Federkräfte der Tragfeder und/oder durch Seitenkräfte und/oder durch Lager-Verzwängungskräfte ausgelöst werden, wobei die Dämpferlagerung entsprechend belastet wird.

Durch die DE 10 2005 053 493 A1 ist ferner ein Federbein für eine aktive Radaufhängung für Kraftfahrzeuge bekannt, bei dem zur Wank- und Nickstabilisierung und/oder zur Höhenverstellung der Karosserie des Kraftfahrzeuges innerhalb einer Tragfeder und einer Speicherfeder um den Stoßdämpfer herum ein elektromotorisch betriebener Stelltrieb vorgesehen ist, der auf einen axial verschiebbaren Verstellfederteller wirkt. Auch hier können kinematisch- und lagerungsbedingte Verzwängungen zu einer gewissen Schwergängigkeit des Stoßdämpfers und gegebenenfalls des Verstelltriebes mit den vorstehend genannten Beeinträchtigungen führen.

Aus der gattungsbildenden FR-A-2 897 330 ist ein Federbein für eine Radaufhängung von Kraftfahrzeugen bekannt. Das Federbein weist einen Teleskop-Stoßdämpfer mit einem Dämpferrohr und einer im Dämpferrohr verschiebbar geführten Kolbenstange auf. Der Kolbenstange ist zusätzlich zur herkömmlichen inneren Kolbenstangenführung eine externe Führung zugeordnet, die die Kolbenstange bei einer Querkraftbelastung radial abstützt.

Aufgabe der Erfindung ist es, ein Federbein der gattungsgemäßen Art vorzuschlagen, bei dem mit baulich geringem Mehraufwand das Stoßdämpfer-Ansprechverhalten bzw. der Fahrkomfort der Radaufhängung verbessert ist.

Diese Aufgabe wird erfindungsgemäß mit den Merkmalen des Patentanspruches 1 gelöst. Vorteilhafte Ausgestaltungen der Erfindung sind in den Unteransprüchen angeführt.

Gemäß dem kennzeichnenden Teil des Patentanspruches 1 ist der Kolbenstange des Stoßdämpfers eine externe Führung zugeordnet, die die Kolbenstange bei einer Querkraftbelastung radial abstützt. Auf diese Weise ist neben der üblichen inneren Kolbenstangenführung innerhalb des Dämpferrohres mit der externen Führung ein zusätzlicher Abstützpunkt außerhalb des Dämpferrohres bereitgestellt, der bei einer Querkraftbelastung einem Ausknicken der Kolbenstange entgegenwirkt.

Die externe Führung kann zur Vergrößerung einer "Abstützbasis" der Kolbenstange zwischen dem Dämpferrohr und einem aufbauseitigen bzw. radführungselementseitigen Anbindungspunkt am Kolbenstangenende vorgesehen sein.

Mittels der Erfindung gelingt es, die kinematisch- und lagerungsbedingten Verzwängungen der Kolbenstangenführung des Stoßdämpfers auf ein nicht komfortschädliches Maß zu begrenzen. Die externe Führung der Kolbenstange kann weiter dadurch verbessert werden, dass diese zwischen der Kolbenstange und dem Dämpferrohr des Stoßdämpfers geschaltet ist.

Die Führung kann in einer hinsichtlich des Bauraumes und des Fertigungsaufwandes besonders günstigen Weise durch zumindest ein parallel zur Kolbenstange ausgerichtetes und/oder innerhalb der Feder liegendes Führungselement, etwa eine Führungsstange gebildet sein, die einerseits biegesteif befestigt und andererseits in einem Linearlager axial verschiebbar geführt sein kann. Damit gelingt es, die Abstützbasis gegen Querkraftbelastungen bzw. Biegemomente zu erhöhen und somit im Wesentlichen verzwängungsfrei aufzunehmen.

Erfindungsgemäß ist das Führungselement an einem mit der Kolbenstange fest verbundenen Federteller befestigt und in einem Linearlager axial verschiebbar geführt, das an dem Dämpferrohr des Stoßdämpfers angeordnet ist. Daraus resultiert eine baulich kompakte und robuste Konstruktion, die zudem besonders montageeinfach ist.

Bei in mehreren Belastungsebenen auftretenden Verzwängungskräften innerhalb der Radaufhängung können in vorteilhafter Weise mehrere Führungsstangen um die Kolbenstange herum angeordnet sein, die jeweils in entsprechenden Radiallagern axial verschiebbar geführt sind. Insbesondere können drei um 120° zueinander umfangsversetzte Säulenführungen vorgesehen sein. Die Säulenführungen können jeweils die Führungsstangen aufweisen, die mit drei entsprechend angeordneten Linearlagern zusammenwirken und eine räumlich besonders wirksame Querkraftabstützung am Stoßdämpfer sicherstellen.

Die Linearlager der Führung können als Gleitlager mit eingesetzten Lagerbüchsen oder zur Erzielung einer besonders leichtgängigen und verschleißbeständigen Führung als Linearwälzlager ausgeführt sein.

Des Weiteren können das eine oder die mehreren Linearlager in einer scheibenförmigen Lagerplatte mit angeformten Lageraugen ausgeführt sein, wobei die Lagerplatte an dem Dämpferrohr befestigt oder fertigungstechnisch besonders kostengünstig einstückig mit dem Dämpferrohr hergestellt ist.

In einer Federbeinanordnung der Radaufhängung mit nach unten ragender Kolbenstange wird ferner vorgeschlagen, dass die Kolbenstange fest mit dem unteren Federteller der Tragfeder und über eine abragende Stütze mit dem Radführungselement verbunden ist. Dementsprechend bilden die untere Anlenkung des Stoßdämpfers mit dem Federteller und den daran befestigten Führungsstangen eine kompakte Abstützung auftretender Querkräfte und Biegemomente.

Bei einer Radaufhängung mit aktivem Federbein zur Höhenverstellung der Karosserie des Kraftfahrzeuges und/oder zur Nick- und Wankstabilisierung kann in an sich bekannter Weise oberhalb der Tragfeder eine ebenfalls um den Stoßdämpfer angeordnete Speicherfeder angeordnet sein, die an dem aufbauseitigen Federteller und an einem dazwischen liegenden Verstellfederteller abgestützt ist, an dem auch die Tragfeder anliegt, wobei ferner eine Verstellvorrichtung mit einem Kugelgewindetrieb vorgesehen ist, mittels der der Verstellfederteller axial relativ zum Dämpferrohr verschiebbar ist und wobei die externe Führung zwischen Kolbenstange und Dämpferrohr zur Erzielung einer baulich einfachen und robusten Konstruktion unterhalb des Verstellfedertellers angeordnet ist.

Dabei ist es vorteilhaft, wenn in dem Verstellfederteller mit den Führungsstangen korrespondierende Durchbrüche vorgesehen sind, in die die Führungsstangen bei Tiefniveaulage der Verstellvorrichtung eintauchen können. Dies ermöglicht eine besonders kurz bauende Konstruktion des Federbeines mit der Verstellvorrichtung.

Schließlich kann zwischen dem unteren, die Führungstangen bzw. die Führungselemente tragenden Federteller und dem Dämpferrohr des Stoßdämpfers eine radial innerhalb der Führungsstangen liegende, gummielastische Zusatzfeder angeordnet sein, die zur Erhöhung der Federrate bei schwerer Beladung des Kraftfahrzeuges und als Durchfederanschlag dient.

Ein Ausführungsbeispiel der Erfindung ist im Folgenden mit weiteren Einzelheiten näher erläutert. Die anliegende, schematische Zeichnung zeigt eine Seitenansicht eines Federbeines einer Radaufhängung für Kraftfahrzeuge, mit einem Teleskop-Stoßdämpfer, einer Tragfeder, einer Speicherfeder, einer elektromotorischen Verstellvorrichtung und einer externen Führung zwischen Kolbenstange und Dämpferrohr des Stoßdämpfers.

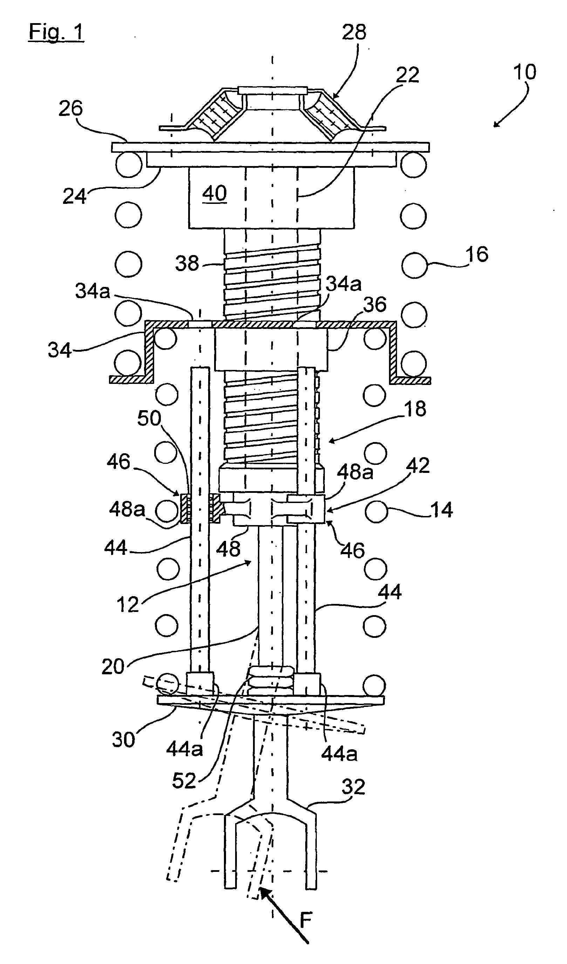

In der Zeichnung ist mit 10 ein aktives Federbein für eine nicht dargestellte Radaufhängung eines Kraftfahrzeuges bezeichnet, das sich im wesentlichen aus einem, auf dem Kopf stehenden Teleskop-Stoßdämpfer 12, einer Tragfeder 14, einer in Reihe dazu geschalteten Speicherfeder 16 und einem elektromotorischen Verstelltrieb 18 zusammensetzt. Soweit im Folgenden nicht beschrieben, sind die genannten Bauteile herkömmlicher Stand der Technik.

Der Stoßdämpfer 12 weist eine Kolbenstange 20 auf, die in einem Dämpferrohr 22 (nicht ersichtlich, nur in gestrichelten Linien angedeutet) in bekannter Weise axial verschiebbar geführt ist. Der Stoßdämpfer 12 ist ein Einrohrdämpfer.

Das Dämpferrohr 22 ist an einer Lagerplatte 24 befestigt, die einen aufbauseitigen Federteller 26 aufweist, an dem die oben liegende Speicherfeder 16 abgestützt ist. Die Lagerplatte 24 ist ferner unter Zwischenschaltung eines Gummimetall-Lagers, das heißt eines Dämpferlagers 28, mit dem Aufbau (nicht dargestellt) des Kraftfahrzeuges verbunden. Das Dämpferlager 28 ist mit einem nicht gezeigten Karosseriedom verbindbar und dient im Wesentlichen der akustischen Abkopplung zur Karosserie.

Die Kolbenstange 20 des Stoßdämpfers 12 ragt frei nach unten aus dem Dämpferrohr 22 und ist mit ihrem Kolbenstangenende fest mit einem unteren Federteller 30 verbunden, an dem auch die untere Tragfeder 14 fest abgestützt ist. Der Federteller 30 geht in eine nach unten abragende, gabelförmige Stelze 32 über, über die die Kolbenstange 20 mit einem Radführungselement (nicht dargestellt) der Radaufhängung, z. B. einem Traglenker oder einem Radträger, gelenkig verbunden ist.

Die Tragfeder 14 und die Speicherfeder 16, die wie ersichtlich Schraubendruckfedern sind, stützen sich an einem einheitlichen Verstellfederteller 34 ab, der mit einer Kugelgewindemutter 36 des Verstelltriebes 18 ein gemeinsames Funktionsteil bildet.

Die Kugelgewindemutter 36 wirkt in an sich bekannter Weise unter Zwischenschaltung von Kugeln als Wälzelemente (nicht ersichtlich) mit einer rotierbaren Gewindespindel 38 zusammen, die in ebenfalls nicht ersichtlicher Weise drehbar auf dem Dämpferrohr 22 des Stoßdämpfers 12 gelagert ist und die mittels eines an der Lagerplatte 24 angeordneten, ringförmigen Elektromotors 40 gezielt verdrehbar ist. Die Gewindespindel 38 ist an dem stillstehenden Dämpferrohr 22 beispielhaft zweifach wälzgelagert.

Bei einer Ansteuerung des Elektromotors 40 wird die Gewindespindel 38 in der einen oder anderen Drehrichtung verdreht und dementsprechend der Verstellfederteller 34 über die Kugelgewindemutter 36 axial verschoben, wodurch der Aufbau des Kraftfahrzeuges durch mehr oder minder starke Kompression der Tragfeder 14 angehoben oder abgesenkt wird. Die Speicherfeder 16 dient in bekannter Weise zur Verminderung der aufzubringenden Stellkräfte.

Zwischen dem Dämpferrohr 22 und der Kolbenstange 20 ist neben der nicht dargestellten, inneren Kolbenstangenführung im Dämpferrohr 22 eine externe Führung 42 vorgesehen, die sich im Wesentlichen aus drei um 120° umfangsversetzte Säulenführungen zusammensetzt. Die Säulenführungen weisen jeweils metallische Führungsstangen 44 (auf der Zeichnung sind nur zwei Führungsstangen 44 ersichtlich) und korrespondierende Linearlager 46 auf.

Die als Rundprofil hergestellten Führungsstangen 44 sind an dem unteren Federteller 30 biegesteif z. B. durch Schraubverbindungen 44a befestigt, wobei deren Mittelachsen auf einer einheitlichen Kreisbahn innerhalb der Tragfeder 14 positioniert sind.

Die unterhalb des Verstellfedertellers 34 angeordneten, parallel zur Kolbenstange 20 verlaufenden Führungsstangen 44 sind in ihrer Länge konstruktiv so ausgelegt, dass in der Hochniveaulage der Karosserie (voll ausgefahrene Position der Kugelgewindemutter 36) die Führung in den Linearlagern 46 erhalten bleibt, während in der anderen Extremposition (Tiefniveaulage) die Führungsstangen 44 in Durchbrüche 34a des Verstellfedertellers 34 eintauchen können und somit den axialen Verstellweg nicht behindern.

Die Linearlager 46 weisen in Lageraugen 48a einer scheibenförmigen Lagerplatte 48 eingesetzte Lagerbüchsen 50 auf, in denen die Führungsstangen 44 axial verschiebbar geführt sind. Die Lagerplatte 48 ist entweder an dem Dämpferrohr 22 durch eine Schraubverbindung oder Schweißverbindung befestigt oder bevorzugt einstückig mit dem Dämpferrohr 22 gefertigt.

Radial innerhalb der Führungsstangen 44 ist um die Kolbenstange 20 eine gummielastische Zusatzfeder 52 angeordnet, die an dem Federteller 30 anliegt und die bei einem stärkeren Durchfedern der Radaufhängung mit der Lagerplatte 48 des Dämpferrohres 22 in Kontakt gerät und somit progressiv die Federrate der Tragfeder 14 in an sich bekannter Weise erhöht.

Die externe Führung 42 mit den in den Linearlagern 46 geführten Führungsstangen 44 bewirkt, dass auf das Federbein 10 bzw. den Stoßdämpfer 12 durch Seitenkräfte, einseitige Federkräfte (insbesondere der Tragfeder 14) und/oder Lagerverzwängungskräfte ausgeübte Störkräfte oder -momente die innere Kolbenstangenführung entlasten. Das heißt, dass in der Radaufhängung auf den Stoßdämpfer 12 wirkende Querkräfte zumindest teilweise von der externen Führung 42 aufgenommen werden.

Wie aus der Zeichnung hervorgeht, entstehen solche, auf den Stoßdämpfer 12 wirkende Querkräfte sobald die Belastungskraft F nicht koaxial zur Kolbenstange 20 ausgerichtet ist, sondern mit einer Querkomponente auftritt, das heißt schräg an der gabelförmigen Stelze 32 angreift.

Die Gründe für das Zustandekommen einer solchen zusätzlichen Querkraftkomponente sind vielfältig: So kann sich die Querkraftkomponente aus einem Rückstellmoment aus dem Dämpferlager bei kardanischer Auslenkung der Federbeinachse aus der entspannten Null-Lage ergeben. Das Rückstellmoment tritt im Zuge der kinematischen Bewegung auf, welche der Traglenker dem Federbein aufzwingt. Außerdem kann sich die Querkraftkomponente aus einem Rückstellmoment aus der Gummimetalllager-Verbindung zwischen dem Traglenker und der Dämpfergabel ergeben. Bei Feder- und Lenkbewegungen wird dieses Lager sowohl kardanisch verzwängt, als auch verdreht und bewirkt somit Reaktionskräfte und Momente auf die Dämpfergabel. Ebenso kann sich die Querkraftkomponente als Reaktionskraft der trägen Masse des Federbeines bei Überfahrt eines Hindernisses (Schwelle) oder Schlaglochdurchfahrt ergeben. In diesem Fall erfährt die Dämpfergabel eine Kraftkomponente in Richtung schräg nach oben.

Bei den oben angedeuteten Kräfte-Konstellationen besteht die Gefahr, dass - ohne der erfindungsgemäßen Führung 42 - die Kolbenstange 20 ausknickt, wie es in der Zeichnung mit strichpunktierter Linie angedeutet ist. Ein solches Ausknicken der Kolbenstange führt zu dem bereits in der Beschreibungseinleitung erwähnten sogenannten stick-slip-Effekt des Stoßdämpfers, und schließlich zur Zerstörung des Federbeins, respektive des Dämpfers.

Die Erfindung ist nicht auf das dargestellte Ausführungsbeispiel beschränkt. So kann anstelle eines aktiven Federbeines 10 wie vorbeschrieben auch ein Federbein ohne elektromotorische Verstellvorrichtung 18 verwendet sein. Die Verstellvorrichtung 18 kann auch als ein einfacher Gewindetrieb oder anderweitig ausgeführt sein.

Die Linearlager 46 können ggf. auch als Linearwälzlager mit in die Lageraugen 48a eingesetzten Kugelbüchsen konzipiert sein, die eine noch größere Leichtgängigkeit der Führung 42 sicherstellen.

Anstelle dreier Führungsstangen 44 mit entsprechenden Linearlager 46 können gegebenenfalls auch weniger beziehungsweise nur eine Führungsstange 44 vorgesehen sein.

Schließlich können bei anderen baulichen Gegebenheiten in kinematischer Umkehr auch die Führungsstangen 44 an dem Dämpferrohr 22 befestigt und die Linearlager 46 an dem Federteller 30 angeordnet sein.

## Patentansprüche

1. Federbein für Radaufhängungen von Kraftfahrzeugen, mit einem Teleskop-Stoßdämpfer (12) mit einem Dämpferrohr (22) und einer im Dämpferrohr (22) verschiebbar geführten Kolbenstange (20), wobei das Dämpferrohr (22) und die Kolbenstange (20) einerseits am Aufbau und andererseits an einem Radführungselement der Radaufhängung des Kraftfahrzeuges angebunden sind, sowie bevorzugt mit zumindest einer um den Stoßdämpfer (12) angeordneten Feder (14, 16), die zwischen einem aufbauseitigen und einem dämpferseitigen Federteller (26, 30) eingespannt ist, wobei der Kolbenstange (20) eine externe Führung (42) zugeordnet ist, die die Kolbenstange (20) bei einer Querkraftbelastung radial abstützt, und wobei die externe Führung (42) zumindest ein Führungselement (44) aufweist, das an einem mit der Kolbenstange (20) fest verbundenen Federteller (30) befestigt ist **dadurch gekennzeichnet, dass** das Führungselement in einem Linearlager (46) axial verschiebbar geführt ist, das an dem Dämpferrohr (22) des Stoßdämpfers (12) angeordnet ist.

2. Federbein nach Anspruch 1, **dadurch gekennzeichnet, dass** die externe Führung (42) zwischen dem Dämpferrohr (22) und einem aufbauseitigen beziehungsweise radführungselementseitigen Anbindungspunkt der Kolbenstange (20) vorgesehen ist.

3. Federbein nach Anspruch 1 oder 2, **dadurch gekennzeichnet, dass** die externe Führung (42) zwischen Kolbenstange (20) und dem Dämpferrohr (22) geschaltet ist.

4. Federbein nach Anspruch 1, 2 oder 3, **dadurch gekennzeichnet, dass** das zumindest eine Führungselement (44) parallel zur Kolbenstange (20) ausgerichtet und/oder innerhalb der Feder (14) angeordnet ist, wobei das Führungselement einerseits biegesteif befestigt und andererseits in dem Linearlager (46) axial verschiebbar geführt ist.

5. Federbein nach einem der vorhergehenden Ansprüche, **dadurch gekennzeichnet, dass** mehrere Führungselemente (44) um die Kolbenstange (20) herum angeordnet sind, die jeweils in entsprechenden Linearlagern (46) axial verschiebbar geführt sind.

6. Federbein nach Anspruch5, **dadurch gekennzeichnet, dass** drei um 120° zueinander umfangsversetzte Führungsstangen (44) vorgesehen sind.

7. Federbein nach einem der vorhergehenden Ansprüche, **dadurch gekennzeichnet, dass** die Linearlager (46) als Gleitlager mit eingesetzten Lagerbüchsen (50) ausgeführt sind.

8. Federbein nach einem der vorhergehenden Ansprüche, **dadurch gekennzeichnet, dass** die Linearlager (46) als Linearwälzlager ausgeführt sind.

9. Federbein nach einem der vorhergehenden Ansprüche, **dadurch gekennzeichnet, dass** das zumindest ein Linearlager (46) in einer scheibenförmigen Lagerplatte (48) mit angeformten Lageraugen (48a) ausgeführt ist, wobei die Lagerplatte (48) an dem Dämpferrohr (22) befestigt oder einstückig mit dem Dämpferrohr (22) hergestellt ist.

10. Federbein nach einem der vorhergehenden Ansprüche, **dadurch gekennzeichnet, dass** die Kolbenstange (20) fest mit dem unteren Federteller (30) der Tragfeder (14) und über eine Stelze (32) mit dem Radführungselement verbunden ist.

11. Federbein nach Anspruch 10, **dadurch gekennzeichnet, dass** oberhalb der Tragfeder (14) eine ebenfalls um den Stoßdämpfer (12) angeordnete Speicherfeder (16) angeordnet ist, die an dem aufbauseitigen Federteller (26) und an einem dazwischen liegenden Verstellfederteller (34) abgestützt ist, an dem auch die Tragfeder (14) anliegt, dass ferner eine Verstellvorrichtung (18) mit einem Kugelgewindetrieb (36, 38) vorgesehen ist, mittels der der Verstellfederteller (34) axial relativ zum Dämpferrohr (22) verschiebbar ist, und dass die externe Führung (42) zwischen Kolbenstange (20) und Dämpferrohr (22) unterhalb des Verstellfedertellers (34) angeordnet ist.

12. Federbein nach Anspruch 11, **dadurch gekennzeichnet, dass** in dem Verstellfederteller (34) mit den Führungselementen (44) korrespondierende Durchbrüche (34a) vorgesehen sind, in die die Führungselemente (44) bei Tiefniveaulage der Verstellvorrichtung (18) eintauchen können.

13. Federbein nach einem der Ansprüche 1 bis 12, **dadurch gekennzeichnet, dass** zwischen dem unteren, die Führungselemente (44) tragenden Federteller (30) und dem Dämpferrohr (22) des Stoßdämpfers (12) eine radial innerhalb der Führungselemente (44) liegende, gummielastische Zusatzfeder (52) angeordnet ist.

## Claims

1. Spring strut for wheel suspensions of motor vehicles, having a telescopic shock-absorbing damper (12) with a damper tube (22) and with a piston rod (20) movably guided in the damper tube (22), with the damper tube (22) and the piston rod (20) being connected on the one hand to the body and on the other hand to a wheel control element of the wheel suspension of the motor vehicle, and preferably having at least one spring (14, 16) which is arranged around the shock-absorbing damper (12) and which is braced between a body-side and a damper-side spring plate (26, 30), with the piston rod (20) being assigned an external guide (42) which supports the piston rod (20) under transverse force loading, and with the external guide (42) having at least one guide element (44) which is fastened to a spring plate (30) fixedly connected to the piston rod (20), **characterized in that** the guide element is guided in an axially movable manner in a linear bearing (46) which is arranged on the damper tube (22) of the shock-absorbing damper (12).

2. Spring strut according to Claim 1, **characterized in that** the external guide (42) is provided between the damper tube (22) and a body-side or wheel-control-element-side connecting point of the piston rod (20).

3. Spring strut according to Claim 1 or 2, **characterized in that** the external guide (42) is connected between the piston rod (20) and the damper tube (22).

4. Spring strut according to Claim 1, 2 or 3, **characterized in that** the at least one guide element (44) is aligned parallel to the piston rod (20) and/or is arranged within the spring (14), with the guide element being fastened in a flexurally rigid manner at one side and being guided in an axially movable manner at the other side in the linear bearing (46).

5. Spring strut according to one of the preceding claims, **characterized in that** a plurality of guide elements (44) are arranged around the piston rod (20), which guide elements (44) are in each case guided in an axially movable manner in corresponding linear bearings (46).

6. Spring strut according to Claim 5, **characterized in that** three guide rods (44) are provided which are circumferentially offset with respect to one another by 120°.

7. Spring strut according to one of the preceding claims, **characterized in that** the linear bearings (46) are designed as plain bearings with inserted bearing bushes (50).

8. Spring strut according to one of the preceding claims, **characterized in that** the linear bearings (46) are designed as linear rolling bearings.

9. Spring strut according to one of the preceding claims, **characterized in that** the at least one linear bearing (46) is formed in a disc-shaped bearing plate (48) with integrally formed bearing lugs (48a), with the bearing plate (48) being fastened to the damper tube (22) or being produced in one piece with the damper tube (22).

10. Spring strut according to one of the preceding claims, **characterized in that** the piston rod (20) is fixedly connected to the lower spring plate (30) of the load-bearing spring (14) and is connected via a stilt (32) to the wheel control element.

11. Spring strut according to Claim 10, **characterized in that** a store spring (16) which is likewise arranged around the shock-absorbing damper (12) is arranged above the load-bearing spring (14), which store spring (16) is supported on the body-side spring plate (26) and on an interposed adjusting spring plate (34) against which the load-bearing spring (14) also bears, **in that**, furthermore, an adjusting device (18) which has a ball screw drive (36, 38) is provided by means of which the adjusting spring plate (34) can be moved axially relative to the damper tube (22), and **in that** the external guide (42) between the piston rod (20) and damper tube (22) is arranged below the adjusting spring plate (34).

12. Spring strut according to Claim 11, **characterized in that** apertures (34a) which correspond to the guide elements (44) are provided in the adjusting spring plate (34), into which apertures (34a) the guide elements (44) can protrude when the adjusting device (18) is in a low-level position.

13. Spring strut according to one of Claims 1 to 12, **characterized in that** a resiliently elastic auxiliary spring (52) which is situated radially within the guide elements (44) is arranged between the lower spring plate (30), which supports the guide elements (44), and the damper tube (22) of the shock-absorbing damper (12).

## Revendications

1. Jambe de force pour suspensions de roues de véhicules automobiles, comprenant un amortisseur télescopique (12) avec un tube amortisseur (22) et une tige de piston (20) guidée de manière à pouvoir coulisser dans le tube amortisseur (22), le tube amortisseur (22) et la tige de piston (20) étant raccordés d'une part à la carrosserie et d'autre part à un élément de guidage de roue de la suspension des roues du véhicule automobile, et de préférence comprenant au moins un ressort (14, 16) disposé autour de l'amortisseur (12), qui est serré entre une coupelle de ressort (26) du côté de la carrosserie et une coupelle de ressort (30) du côté de l'amortisseur, la tige de piston (20) étant associée à un guide externe (42), qui supporte radialement la tige de piston (20) dans le cas d'une contrainte de force transversale, et le guide externe (42) présentant au moins un élément de guidage (44) qui est fixé sur une coupelle de ressort (30) connectée fixement à la tige de piston (20), **caractérisée en ce que** l'élément de guidage est guidé de manière à pouvoir coulisser axialement dans un palier linéaire (46), qui est disposé sur le tube amortisseur (22) de l'amortisseur (12).

2. Jambe de force selon la revendication 1, **caractérisée en ce que** le guide externe (42) est prévu entre le tube amortisseur (22) et un point de raccordement de la tige de piston (20) du côté de la carrosserie, respectivement du côté de l'élément de guidage des roues.

3. Jambe de force selon la revendication 1 ou 2, **caractérisée en ce que** le guide externe (42) est monté entre la tige de piston (20) et le tube amortisseur (22).

4. Jambe de force selon la revendication 1, 2 ou 3, **caractérisée en ce qu'**au moins un élément de guidage (44) est orienté parallèlement à la tige de piston (20) et/ou est disposé à l'intérieur du ressort (14), l'élément de guidage étant fixé d'une part de manière rigide en torsion et étant guidé d'autre part de manière à pouvoir coulisser axialement dans le palier linéaire (46).

5. Jambe de force selon l'une quelconque des revendications précédentes, **caractérisée en ce que** plusieurs éléments de guidage (44) sont disposés autour de la tige de piston (20), lesquels sont guidés à chaque fois de manière à pouvoir coulisser axialement dans des paliers linéaires correspondants (46).

6. Jambe de force selon la revendication 5, **caractérisée en ce qu'**il est prévu trois tiges de guidage (44) décalées de 120° les unes par rapport aux autres sur la circonférence.

7. Jambe de force selon l'une quelconque des revendications précédentes, **caractérisée en ce que** les paliers linéaires (46) sont réalisés sous forme de paliers lisses avec des douilles paliers insérées (50).

8. Jambe de force selon l'une quelconque des revendications précédentes, **caractérisée en ce que** les paliers linéaires (46) sont réalisés sous forme de paliers à roulements linéaires.

9. Jambe de force selon l'une quelconque des revendications précédentes, **caractérisée en ce qu'**au moins un palier linéaire (46) est réalisé dans un plateau de palier (48) en forme de disque avec des oeillets de palier façonnés (48a), le plateau de palier (48) étant fixé sur le tube amortisseur (22) ou étant fabriqué d'une seule pièce avec le tube amortisseur (22).

10. Jambe de force selon l'une quelconque des revendications précédentes, **caractérisée en ce que** la tige de piston (20) est connectée fixement à la coupelle de ressort inférieure (30) du ressort de support (14) et par le biais d'un béquille (32) à l'élément de guidage des roues.

11. Jambe de force selon la revendication 10, **caractérisée en ce qu'**au-dessus du ressort de support (14) est disposé un ressort accumulateur (16) également disposé autour de l'amortisseur (12), lequel est supporté sur la coupelle de ressort du côté de la carrosserie (26) et sur une coupelle de ressort de réglage (34) interposée, sur laquelle s'appuie aussi le ressort de support (14), **en ce qu'**en outre un dispositif de réglage (18) avec un mécanisme d'entraînement à vis à bille (36, 38) est prévu, au moyen duquel la coupelle de ressort de réglage (34) peut coulisser axialement par rapport au tube amortisseur (22), et **en ce que** le guide externe (42) entre la tige de piston (20) et le tube amortisseur (22) est disposé sous la coupelle de ressort de réglage (34).

12. Jambe de force selon la revendication 11, **caractérisée en ce que** l'on prévoit dans la coupelle de ressort de réglage (34) des orifices (34a) correspondant aux éléments de guidage (44), dans lesquels les éléments de guidage (44) peuvent être insérés lorsque le niveau du dispositif de réglage (18) est bas.

13. Jambe de force selon l'une quelconque des revendications 1 à 12, **caractérisée en ce qu'**un ressort supplémentaire (52) en caoutchouc élastomère, situé radialement à l'intérieur des éléments de guidage (44), est disposé entre la coupelle de ressort inférieure (30) portant les éléments de guidage (44), et le tube amortisseur (22) de l'amortisseur (12).
